# EUROPEAN PATENT APPLICATION

(11) **EP 4 358 547 A1**
(43) Date of publication of application: **24.04.2024**
(21) Application number: 21952147.3
(22) Date of filing: 01.08.2021
(51) Int. Cl.: H04W 4/00

(54) **SENDING METHOD, RECEIVING METHOD AND APPARATUSES FOR BLUETOOTH BROADCASTING, DEVICES AND MEDIUM**

(71) Applicant: GUANGDONG OPPO MOBILE TELECOMMUNICATIONS CORP., LTD., Dongguan, Guangdong 523860 (CN)
(72) Inventor: REN, Kai, Dongguan, Guangdong 523860 (CN)
(74) Representative: Novagraaf Technologies
(86) International application number: PCT/CN2021/109951
(87) International publication number: WO 2023/010237

(57) **Abstract**

The present application relates to the field of Bluetooth broadcasting, and discloses a sending method, receiving method and apparatuses for Bluetooth broadcasting, devices and a medium. The sending method for Bluetooth broadcasting comprises: a first Bluetooth device sends Bluetooth broadcast synchronization information to a second Bluetooth device, wherein the Bluetooth broadcast synchronization information comprises a uniform resource locator (URL) address, and the URL address points to target information.

## Description

### TECHNICAL FIELD

The present disclosure relates to the field of Bluetooth broadcasting, and in particular to a sending method for Bluetooth broadcasting, a receiving method for Bluetooth broadcasting, apparatuses for Bluetooth broadcasting, devices, and a medium.

### BACKGROUND

A Bluetooth broadcast may usually be sent and received through an extension broadcast package, and the extension broadcast package is configured to carry data information related to Bluetooth broadcasting.

In the related art, a first Bluetooth device may send the extension broadcast package to a second Bluetooth device, and the second Bluetooth device may unpack the extension broadcast package to obtain the data information related to Bluetooth broadcasting.

### SUMMARY OF THE DISCLOSURE

Some embodiments of the present disclosure provide a sending method for Bluetooth broadcasting, a receiving method for Bluetooth broadcasting, apparatuses for Bluetooth broadcasting, devices, and a storage medium. The embodiments of the present disclosure reduce a length of information and ensure an integrity of data information by carrying a uniform resource locator URL address with Bluetooth-broadcast synchronization information. The technical solutions are presented as follows.

In a first aspect, some embodiments of the present disclosure provide a sending method for Bluetooth broadcasting, and the method may include the following:
sending, by a first Bluetooth device, Bluetooth-broadcast synchronization information to a second Bluetooth device.

The Bluetooth-broadcast synchronization information may include a uniform resource locator URL address and the URL address is configured to point to target information.

In a second aspect, some embodiments of the present disclosure further provide a receiving method for Bluetooth broadcasting, and the method may include the following:
receiving, by a second Bluetooth device, Bluetooth-broadcast synchronization information sent from a first Bluetooth device; where the Bluetooth-broadcast synchronization information comprises a uniform resource locator URL address, and the URL address is configured to point to target information; and
obtaining, by the second Bluetooth device, the target information according to the URL address.

In a third aspect, some embodiments of the present disclosure further provide a sending apparatus for Bluetooth broadcasting, and the apparatus may include the following modules.

A sending apparatus may be configured to send Bluetooth-broadcast synchronization information to a second Bluetooth device by a first Bluetooth device.

The Bluetooth-broadcast synchronization information may include a uniform resource locator URL address, and the URL address is configured to point to target information.

In a fourth aspect, some embodiments of the present disclosure further provide a receiving apparatus for Bluetooth broadcasting, and the apparatus may include the following modules.

A receiving apparatus may be configured to receive Bluetooth-broadcast synchronization information sent from a first Bluetooth device, where the Bluetooth-broadcast synchronization information includes a uniform resource locator URL address and the URL address is configured to point to target information.

An obtaining apparatus may be configured to obtain the target information according to the URL address.

In a fifth aspect, some embodiments of the present disclosure further provide a first Bluetooth device and the first Bluetooth device may include a processor and a memory. The memory may store at least one program instruction. The processor may be caused to perform the sending method for Bluetooth broadcasting as described above, when the at least one program instruction is loaded and executed by the processor.

In a sixth aspect, some embodiments of the present disclosure further provide a second Bluetooth device and the second Bluetooth device may include a processor and a memory. The memory may store at least one program instruction. The processor may be caused to perform the receiving method for Bluetooth broadcasting as described above, when the at least one program instruction is loaded and executed by the processor.

In a seventh aspect, some embodiments of the present disclosure further provide a computer-readable storage medium and the computer-readable storage medium may store at least one program code. A processor may be caused to perform the sending method or the receiving method for Bluetooth broadcasting as described above, when the at least one program code is loaded and executed by the processor.

In an eighth aspect, some embodiments of the present disclosure further provide a computer program or computer program product, and the computer program or computer program product may include at least one computer instruction. The at least one computer instruction may be stored in a computer-readable storage medium. A processor of a computer device may execute the at least one computer instruction to cause the computer device to perform the sending method or the receiving method for Bluetooth broadcasting as described above, when the processor of the computer device reads the computer instructions from the computer-readable storage medium.

In a ninth aspect, some embodiments of the present disclosure further provide a chip, and the chip may include a programmable logic circuit and/or at least one program instruction. When the chip executes, the chip may be configured to perform the sending method or the receiving method for Bluetooth broadcasting as described above.

The technical solutions provided in the embodiments of the present disclosure may have the following benefits:
the first Bluetooth device reduces the length of information by carrying the URL address with the Bluetooth-broadcast synchronization information, so that the second Bluetooth device may obtain the target information according to the URL address, thereby an integrity of the data information transmitted for the Bluetooth broadcasting may be ensured.

### BRIEF DESCRIPTION OF THE DRAWINGS

In order to clearly illustrate the technical solutions in the present disclosure, the following briefly illustrates drawings associated with embodiments of the present disclosure. Obviously, the drawings described as follows are only for some embodiments of the present disclosure. For an ordinary skilled in the art, other drawings may be derived according to the following drawings without creative work.
FIG. 1 is a schematic view illustrating a transmission process of a Bluetooth broadcast according to an embodiment of the present disclosure.
FIG. 2 is a schematic view of a frame according to an embodiment of the present disclosure.
FIG. 3 is a schematic view of another frame according to an embodiment of the present disclosure.
FIG. 4 is a flowchart of a sending method for Bluetooth broadcasting according to an embodiment of the present disclosure.
FIG. 5 is a flowchart of a sending method for Bluetooth broadcasting according to an embodiment of the present disclosure.
FIG. 6 is a flowchart of a receiving method for Bluetooth broadcasting according to an embodiment of the present disclosure.
FIG. 7 is a flowchart of a data transmission for Bluetooth broadcasting according to an embodiment of the present disclosure.
FIG. 8 is a flowchart of a receiving method for Bluetooth broadcasting according to an embodiment of the present disclosure.
FIG. 9 is a flowchart of a data transmission for Bluetooth broadcasting according to an embodiment of the present disclosure.
FIG. 10 is a schematic view illustrating a transmission process of a Bluetooth broadcast according to an embodiment of the present disclosure.
FIG. 11 is a schematic view of a frame according to an embodiment of the present disclosure.
FIG. 12 is a schematic view of another frame according to an embodiment of the present disclosure.
FIG. 13 is a structural block view of a sending apparatus for Bluetooth broadcasting according to an embodiment of the present disclosure.
FIG. 14 is a structural block view of a receiving apparatus for Bluetooth broadcasting according to an embodiment of the present disclosure.
FIG. 15 is a structural block view of a Bluetooth device according to an embodiment of the present disclosure.

### DETAILED DESCRIPTION

To clarify the purposes, technical solutions, and advantages of the present disclosure, various embodiments of the present disclosure will be further described in detail based on the drawings.

A Bluetooth technology is a radio technology that supports devices to communicate over short distances, and may enable a wireless information exchange between Bluetooth devices. A Bluetooth device may be a mobile terminal, a smartphone, a tablet computer, a smart home appliance (e.g., a smart speaker, a smart refrigerator, a smart air conditioner, etc.), a wearable smart device (e.g., smart glasses, a smart watch, etc.), a smart sensor (e.g., a temperature sensor, a door/window sensor, etc.), and so on. A type of the Bluetooth device may not be limited by the present disclosure.

In some embodiments, the Bluetooth device may be either a source device for Bluetooth broadcasting or a receiving end device for the Bluetooth broadcasting. The source device is configured to send data related to Bluetooth broadcasting and the receiving end device is configured to receive the data related to Bluetooth broadcasting sent by the source device, thereby a Bluetooth communication may be realized.

The Bluetooth broadcasting may be realized by a transmission of a broadcast package.

A protocol data unit PDU of the broadcast package may include various types, including but not limited to at least one of: an advertising extension indication frame ADV_EXT_IND, an auxiliary advertising indication frame AUX_ADV_IND, an auxiliary synchronization indication frame AUX_SYNC_IND, and an auxiliary chain indication frame AUX_CHAIN_IND.

Taking a transmission for the Bluetooth broadcasting that is performed by a first Bluetooth device and a second Bluetooth device as an example, the first Bluetooth device may send a first extension broadcast package, e.g., an AUX_SYNC_IND package. The first extension broadcast package is configured to carry data information, and the second Bluetooth device may obtain the data information by receiving the first extension broadcast package.

During the transmission, since the data information is relatively long, the data information may exceed a maximum length of a single frame, i.e., the first extension broadcast package may fail to carry all contents of the data information. Therefore, one or more second extension broadcast packages, e.g., the AUX_SYNC_IND package, may be sent along with the first extension broadcast package to carry the remaining contents of the data information, so that all contents of the data information may be sent.

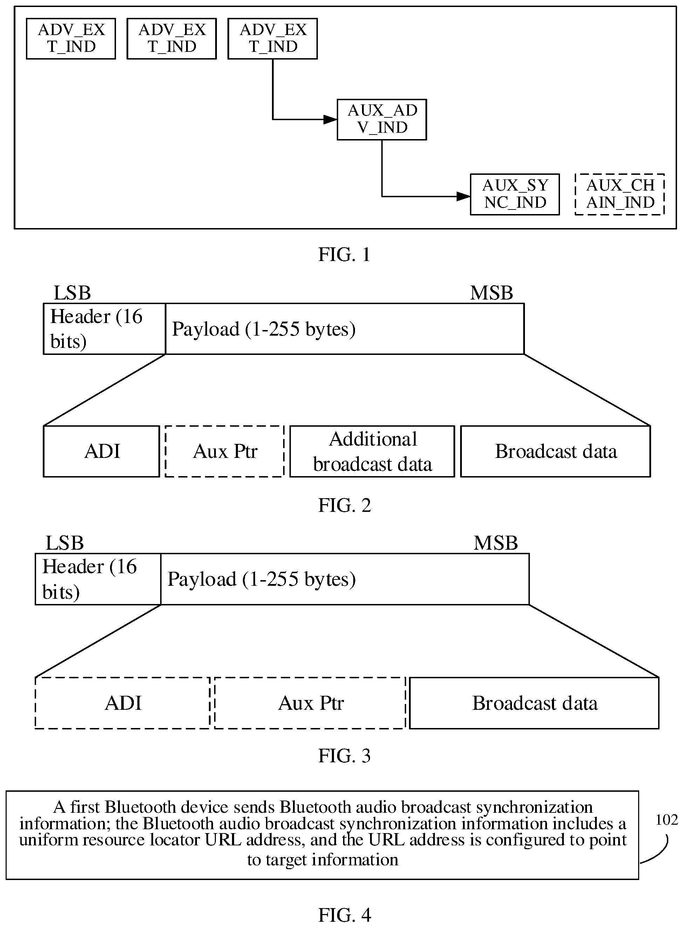

As illustrated in FIG. 1, a transmission process of a Bluetooth broadcast may be explained as follows.

The source device may send an ADV_EXT_IND package, which is configured to instruct the receiving end device to receive an AUX_ADV_IND package. The receiving end device may obtain an instruction to receive the AUX_ADV_IND package, in response to the receiving end device receiving the ADV_EXT_IND package. The source device may then send the AUX_ADV_IND package, which is configured to instruct the receiving end device to receive an AUX_SYNC_IND package. The receiving end device may obtain an instruction to receive the AUX_SYNC_IND package, in response to the receiving end device receiving the AUX_ADV_IND package. The source device may then send the AUX_SYNC_IND package, and the receiving end device may receive the AUX_SYNC_IND package.

A structure of the AUX_SYNC_IND is illustrated in FIG. 2. Four fields may be included in a payload of the AUX_SYNC_IND, including advertising data information (ADI), an Auxilary Ptrl (Aux Ptr), additional broadcast data, and advertising data (Adv data). The Aux Ptr may be an optional field, and the broadcast data field may carry Bluetooth broadcast audio stream metadata (BASM).

As illustrated in FIG. 1, when a length of the Bluetooth BASM exceeds a length of the AUX_SYNC_IND, the source device may alternatively send at least one AUX_CHAIN_IND package, and the at least one AUX_CHAIN_IND package may carry a part of the contents of the Bluetooth BASM.

A structure of the AUX_CHAIN_IND is illustrated in FIG. 3. Three fields may be included in a payload of the AUX_CHAIN_IND, including the ADI, the Aux Prt, and the broadcast data. The ADI and the Aux Prt may be optional fields.

When the length of the Bluetooth BASM exceeds a maximum length of a single AUX_SYNC_IND, a part of the contents of the Bluetooth BASM that exceeds the maximum length of the single AUX_SYNC_IND may be carried in the AUX_CHAIN_IND, e.g., the part of the contents of the Bluetooth BASM may be carried in the broadcast data field of the AUX_CHAIN_IND. The ADI field of the AUX_CHAIN_IND may exist when the ADI field of the AUX_SYNC_IND exists. The Aux Ptr field included in both the AUX_CHAIN_IND and the AUX_SYNC_IND may be applied when the AUX_CHAIN_IND needs to be sent.

The Aux Ptr field may be illustrated through the following table.

| Aux Ptr | | | | |
|---|---|---|---|---|
| Channel Index (6 bits) | CA (1 bit) | Offset Units (1 bit) | AUX Offset (13 bits) | AUX PHY (3 bits) |

The channel index may be configured to indicate a location where a package for the Bluetooth broadcasting is to be received. The AUX Offset may be configured to indicate a time difference between a current time and a time when the package is received, and the time difference may be measured by offset units, e.g., the time difference between the current time and the time when the package is received is 2 offset units. The AUX PHY may be configured to indicate a location of a physical layer for receiving data package.

FIG. 4 is a flowchart of a sending method for the Bluetooth broadcasting according to an embodiment of the present disclosure. The method may be applied to the transmission process of a Bluetooth broadcast as illustrated in FIG. 1, and the method may include the following operations.

At block 102: a first Bluetooth device sends Bluetooth-broadcast synchronization information to a second Bluetooth device.

The Bluetooth-broadcast synchronization information may include a uniform resource locator URL address, and the URL address is configured to point to target information.

In some embodiments, the first Bluetooth device is a source device for the Bluetooth broadcasting, and the second Bluetooth device is a receiving end device for the Bluetooth broadcasting. For example, the first Bluetooth device may be a smart phone, and the second Bluetooth device may be a tablet computer.

A data type of a Bluetooth broadcast may include, but not be limited to, at least one of: audio data and video data. In some embodiments, the Bluetooth broadcast in the embodiments of the present disclosure may be a Bluetooth audio broadcast, or a Bluetooth video broadcast that supports an augmented reality (AR) technology, a virtual reality (VR) technology, and so on.

The URL address is a string that describes an information resource. An access location and an access method of the information resource may be obtained based on the URL address. One URL address may correspond uniquely to a single information resource.

In some embodiments, the URL address may be categorized into a URL long address or a URL short address according to a size of the URL address in bytes. The URL long address occupies more bytes than the URL short address.

In some embodiments, the URL address in the embodiments of the present disclosure may be realized as the URL short address in order to reduce a length of the Bluetooth-broadcast synchronization information. A format of the URL short address and the size of the URL short address in bytes may be set based on protocol standards or actual needs.

In some embodiments, data pointed to by the URL address carries the target information. The URL address may be configured to point to at least one of a web page or a QR code. Alternatively, the target information may be carried in web page data pointed to by the URL address. The web page data may include, but not be limited to, at least one of: text information, image information, audio information, and video information. For example, the web page data pointed to by the URL address may include the text information, the image information, and the audio information of a song, and the target information is the audio information of the song.

The Bluetooth-broadcast synchronization information may include at least one of the following information.

A universally unique identifier (UUID) for a Bluetooth broadcasting service.

A Broadcast_ID may be configured to identify a specific Bluetooth broadcast audio data stream.

Broadcast isochronous group info (BIGInfo) may be configured to perform a Bluetooth broadcast isochronous group synchronization.

The Bluetooth BASM may be configured to further describe a Bluetooth broadcast audio stream under a current Broadcast_ID, for example, an audio stream language, program information, and so on.

The Bluetooth BASM may include at least one of the audio stream language and the program information. In some embodiments, the audio stream language may include at least one of a language and a parental rating.

The Bluetooth BASM may be sent in a length-type-value (LTV) way. The voice, the parental rating, and the program information may be sent according to the three tables below:

**Table 1 Language**

| Parameter | Size (in bytes) | Value |
|---|---|---|
| Length | 1 | 0x04 |
| Type | 1 | 0x03 |
| Value | 3 | a 3-byte language code defined in the protocol |

**Table 2 Parental rating**

| Parameter | Size (in bytes) | Value |
|---|---|---|
| Length | 1 | 0x04 |
| Type | 1 | 0x03 |
| Value | 1 | a value indicating a result of the parental rating |

**Table 3 Program information**

| Parameter | Size (in bytes) | Value |
|---|---|---|
| Length | 1 | N+1 |
| Type | 1 | 0x05 |
| Value | N | a title and/or an abstract |

Each the parameters included in the voice, the parental rating, and the program information may be set based on actual needs or protocol standards for the Bluetooth broadcasting.

In some embodiments, the Bluetooth BASM may include at least one of the voice, the parental rating, and the program information. The parameters included in the voice, the parental rating, and the program information are illustrated in tables 1-3.

The aforementioned parameters are merely illustrative examples, and may not limit the present disclosure.

The target information pointed to by the URL address may be information that is related to the Bluetooth-broadcast synchronization information, or may be information that is not related to the Bluetooth-broadcast synchronization information.

The target information may include, but not be limited to, at least one of: information related to the UUID, information related to the Broadcast_ID, information related to the BIGInfo, and information related to the Bluetooth BASM.

In some embodiments, the target information is information related to the Bluetooth broadcast audio stream.

The URL address, which is included in the Bluetooth-broadcast synchronization information sent from the first Bluetooth device to the second Bluetooth device, may be configured to point to the information related to the Bluetooth broadcast audio stream. For example, the web page data pointed to by the URL address may include the UUID, the Broadcast_ID, and the Bluetooth BASM.

In some embodiments, the target information may include: all contents or a part of the Bluetooth BASM.

The Bluetooth BASM may include the audio stream language, the program information, and so on.

In some embodiments, the target information may include sharing image codes for the Bluetooth broadcasting audio stream. For example, the URL address, which is included in the Bluetooth-broadcast synchronization information sent from the first Bluetooth device to the second Bluetooth device, may be configured to point to a QR code. The second Bluetooth device may share the QR code to a third-party device that may be another Bluetooth device.

According to the block 102, the second Bluetooth device may receive the Bluetooth-broadcast synchronization information sent from the first Bluetooth device, to obtain the URL address. Then, the second Bluetooth device may obtain the URL address through a web browser, and obtain the target information according to the URL address.

For example, when the URL address is the URL short address, the first Bluetooth device may send the Bluetooth-broadcast synchronization information that includes the URL short address to the second Bluetooth device. The second Bluetooth device may parse the URL short address and obtain the web page data pointed to by the URL short address through the web browser, after the second Bluetooth device receiving the Bluetooth-broadcast synchronization information. The target information carried in the web page data may include an album cover, lyric information, and audio information.

In some embodiments, the Bluetooth-broadcast synchronization information may include both the URL address and the Bluetooth BASM. The URL address may be configured to point to a part of the contents of the Bluetooth BASM. For example, the Bluetooth BASM may include all contents of the audio stream language and a part of the contents of the program information, and the URL address may be configured to point to the remaining contents of the program information.

To sum up, in the sending method for the Bluetooth broadcasting in the embodiments of the present disclosure, the first Bluetooth device reduces the length of the information by carrying the URL address with the Bluetooth-broadcast synchronization information, so that the second Bluetooth device may obtain the target information according to the URL address, thereby an integrity of the data information transmitted for the Bluetooth broadcasting may be ensured.

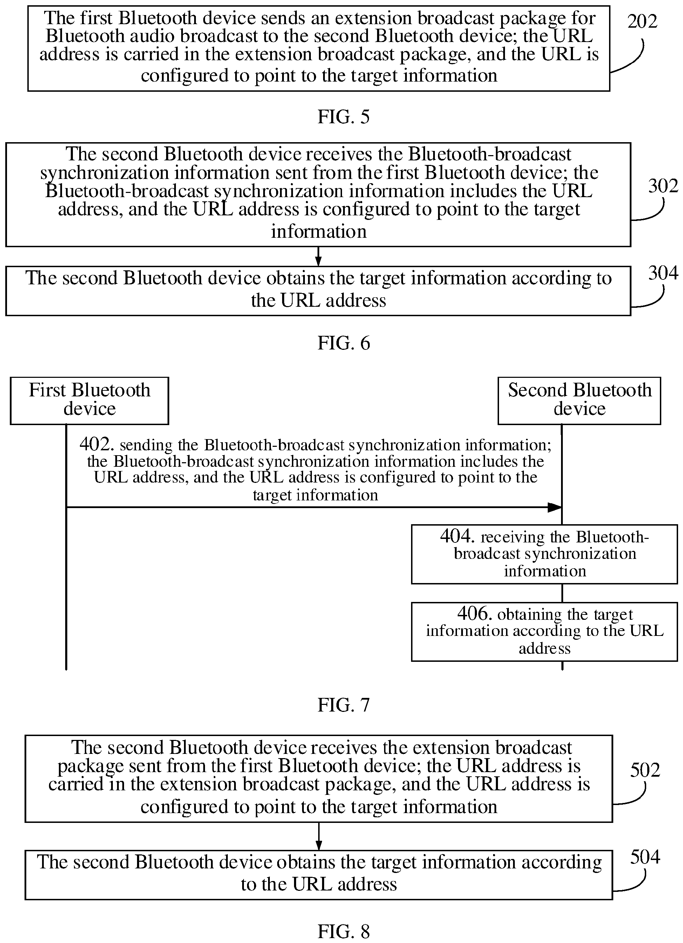

FIG. 5 is a flowchart of a sending method for the Bluetooth broadcasting according to an embodiment of the present disclosure. The method may be applied to the transmission process of a Bluetooth broadcast as illustrated in FIG. 1, and the method may include the following operations.

At block 202: the first Bluetooth device sends an extension broadcast package to the second Bluetooth device.

The URL address is carried in the extension broadcast package, and the URL address is configured to point to the target information.

In some embodiments, the first Bluetooth device is a source device for the Bluetooth broadcasting, and the second Bluetooth device is a receiving end device for the Bluetooth broadcasting.

The URL address may be categorized into a URL long address or a URL short address according to a size of the URL address in bytes. In some embodiments, the URL address in the embodiments of the present disclosure may be realized as the URL short address. The description of the URL short address may refer to embodiments above, and will not be repeated herein.

The target information pointed to by the URL address may be information that is related to the Bluetooth-broadcast synchronization information, or may be information that is not related to the Bluetooth-broadcast synchronization information.

In some embodiments, the target information is information related to the Bluetooth broadcast audio stream.

As mentioned above, the target information may include: all contents or a part of the Bluetooth BASM. In some embodiments, the Bluetooth BASM may include at least one of the audio stream language and the program information. In some embodiments, the target information may include the sharing image codes for the Bluetooth broadcasting audio stream.

The extension broadcast package may be different from a main broadcast package in a way that the extension broadcast package and the main broadcast package belong to different channels. A PDU type of the main broadcast package may be the ADV_EXT_IND. A PDU type of the extension broadcast package may include, but not be limited to, at least one of: the AUX_ADV_IND, the AUX_SYNC_IND, and the AUX_CHAIN_IND.

In some embodiments, the PDU type of the extension broadcast package is the AUX_SYNC_IND.

In some embodiments, the extension broadcast package is sent by the first Bluetooth device periodically.

For example, the first Bluetooth device may periodically send the AUX_SYNC_IND package.

When the PDU type of the extension broadcast package varies, the URL address may be carried in different fields according to the PDU type of the extension broadcast package. In some embodiments, the URL address may be carried in the broadcast data field of the extension broadcast package.

As mentioned above, the URL address may be configured to point to the target information, therefore, in some embodiments, contents carried in the broadcast data field of the extension broadcast package may be realized in the following ways:
the broadcast data field of the extension broadcast package is configured to carry the URL address therein, and the URL address is configured to point to: all contents of the target information;
or, the broadcast data field of the extension broadcast package is configured to carry the URL address and a first content of the target information, and the URL address is configured to point to: contents other than the first content in the target information.

Take, for instance, the target information being the information related to the Bluetooth broadcast audio stream.

Under a condition that the target information includes all contents of the Bluetooth BASM, the broadcast data field of the extension broadcast package may be configured to only carry the URL address therein, and the URL address is configured to point to the all contents of the Bluetooth BASM.

Under a condition the target information includes a part of the contents of the Bluetooth BASM, the broadcast data field of the extension broadcast package may be configured to carry the first content of Bluetooth BASM and the URL address, and the URL address is configured to point to contents other than the first content in the Bluetooth BASM.

According to the block 202, the second Bluetooth device may receive the Bluetooth-broadcast synchronization information sent from the first Bluetooth device, to obtain the URL address. Then, the second Bluetooth device may obtain the URL address through a web browser, and obtain the target information according to the URL address.

For example, when the URL address is the URL short address, the first Bluetooth device may send an extension broadcast package to the second Bluetooth device and a PDU type of the extension broadcast package is the AUX_SYNC_IND. The broadcast data field of the extension broadcast package may be configured to carry the URL short address, and the target information pointed to by the URL short address may include a part of the contents of the Bluetooth BASM. The second Bluetooth device may parse the URL short address and obtain the web page data pointed to by the URL short address, after the second Bluetooth device receiving the AUX_SYNC_IND package, thereby the second Bluetooth device may obtain the part of the contents of the Bluetooth BASM.

In some embodiments, the extension broadcast package may include both the URL address and the Bluetooth BASM, and the URL address is configured to point to a part of the contents of the Bluetooth BASM. For example, the Bluetooth BASM may include all contents of the audio stream language and a part of the contents of the program information, and the URL address may be configured to point to the remaining contents of the program information.

To sum up, the sending method for the Bluetooth broadcasting in the embodiments of the present disclosure provides a method to send the URL address in specific. That is, the first Bluetooth device may send the extension broadcast package that is configured to carry the URL address to the second Bluetooth device, so that the second Bluetooth device may receive the target information.

FIG. 6 is a flowchart of a receiving method for the Bluetooth broadcasting according to an embodiment of the present disclosure. The method may include the following operations.

At block 302: the second Bluetooth device receives the Bluetooth-broadcast synchronization information sent from the first Bluetooth device.

The Bluetooth-broadcast synchronization information may include the URL address, and the URL address is configured to point to target information.

In some embodiments, the first Bluetooth device is a source device for the Bluetooth broadcasting, and the second Bluetooth device is a receiving end device for the Bluetooth broadcasting.

The Bluetooth-broadcast synchronization information may include at least one of: the UUID for the Bluetooth broadcast service, the Broadcast_ID, the BIGInfo, and the Bluetooth BASM. The Bluetooth BASM may include at least one of the audio stream language and the program information. The description of the Bluetooth-broadcast synchronization information may refer to embodiments above, and will not be repeated herein.

The URL address may be categorized into a URL long address or a URL short address according to a size of the URL address in bytes. In some embodiments, the URL address in the embodiments of the present disclosure may be realized as the URL short address. The description of the URL short address may refer to embodiments above, and will not be repeated herein.

The target information pointed to by the URL address may be information that is related to the Bluetooth-broadcast synchronization information, or may be information that is not related to the Bluetooth-broadcast synchronization information.

The target information may include, but not be limited to, at least one of: information related to the UUID, information related to the Broadcast_ID, information related to the BIGInfo, and information related to the Bluetooth BASM.

In some embodiments, the target information is information related to the Bluetooth broadcast audio stream.

The URL address, which is included in the Bluetooth-broadcast synchronization information sent from the first Bluetooth device to the second Bluetooth device, may be configured to point to the information related to the Bluetooth broadcast audio stream. For example, the URL address may be configured to point to at least one of: the UUID, the Broadcast_ID, and the Bluetooth BASM.

In some embodiments, the target information may include: all contents or a part of the Bluetooth BASM.

As mentioned above, the Bluetooth BASM may include at least one of the audio stream language and the program information. Therefore, the target information may include at least one of the audio stream language and the program information.

In some embodiments, the target information may include the sharing image codes for the Bluetooth broadcasting audio stream. For example, the URL address, which is included in the Bluetooth-broadcast synchronization information sent from the first Bluetooth device to the second Bluetooth device, may be configured to point to a QR code for sharing the Bluetooth broadcasting audio stream.

At block 304: The second Bluetooth device obtains the target information according to the URL address.

As mentioned above, the URL address may be configured to point to the target information.

The second Bluetooth device may obtain URL address carried in the Bluetooth-broadcast synchronization information, after the second Bluetooth device receiving the Bluetooth-broadcast synchronization information sent from the first Bluetooth device.

In some embodiments, data pointed to by the URL address may carry the target information. The URL address may be configured to point to at least one of a web page or a QR code. For example, the target information is carried in the web page data pointed to by the URL address.

The block 304 may be realized as follows.

The second Bluetooth device may obtain the web page data pointed to by the URL address through the web browser.

The second Bluetooth device may obtain the target information from the web page data.

In some embodiments, the second Bluetooth device may obtain the URL address by receiving the Bluetooth-broadcast synchronization information sent from the first Bluetooth device. The second Bluetooth device may parse the URL address and obtain the web page data pointed to by the URL address through the web browser thereof. The second Bluetooth device may then obtain the target information from the web data.

For example, when the target information includes all contents of the Bluetooth BASM and the sharing image codes for the Bluetooth broadcast audio stream, the first Bluetooth device may send the Bluetooth-broadcast synchronization information that includes the URL short address to the second Bluetooth device, and the web page data pointed to by the URL address includes the aforementioned target information. The second Bluetooth device may scan to obtain the Bluetooth-broadcast synchronization information, and may then obtain the web page data pointed to by the URL short address through a web browser by parsing the URL short address. Therefore, the second Bluetooth device may obtain all the contents of the Bluetooth BASM and the sharing image codes for the Bluetooth broadcast audio stream. The second Bluetooth device may then send the sharing image codes to a third-party device that may be another Bluetooth device.

FIG. 7 is a flowchart of a data transmission for the Bluetooth broadcasting according to an embodiment of the present disclosure. The flowchart may be applied to the transmission process of a Bluetooth broadcast as illustrated in FIG. 1, and may include the following operations.

At block 402: the first Bluetooth device sends the Bluetooth-broadcast synchronization information to the second Bluetooth device.

The Bluetooth-broadcast synchronization information may include the URL address, and the URL address is configured to point to target information.

In some embodiments, the first Bluetooth device is a source device for the Bluetooth broadcasting, and the second Bluetooth device is a receiving end device for the Bluetooth broadcasting.

The Bluetooth-broadcast synchronization information may include at least one of: the UUID for the Bluetooth broadcast service, the Broadcast_ID, the BIGInfo, and the Bluetooth BASM. The Bluetooth BASM may include at least one of the audio stream language and the program information. The description of the Bluetooth-broadcast synchronization information may refer to embodiments above, and will not be repeated herein.

In some embodiments, the URL address in the embodiments of the present disclosure may be realized as the URL short address. The target information pointed to by the URL address may be the information that is related to the Bluetooth-broadcast synchronization information, or may be the information that is not related to the Bluetooth-broadcast synchronization information.

In some embodiments, the target information may be the information related to the Bluetooth broadcast audio stream. As mentioned above, the target information may include: all contents or a part of the Bluetooth BASM. In some embodiments, the Bluetooth BASM may include at least one of the audio stream language and the program information. In some embodiments, the target information may include the sharing image codes for the Bluetooth broadcasting audio stream.

At block 404: the second Bluetooth device receives the Bluetooth-broadcast synchronization information sent from the first Bluetooth device.

The Bluetooth-broadcast synchronization information may include the URL address, and the URL address is configured to point to target information.

The block 404 may be the same as the block 302 and may be referred to the block 302, so will not be repeated herein.

At block 406: the second Bluetooth device obtains the target information according to the URL address.

As mentioned above, the URL address is configured to point to the target information.

The second Bluetooth device may obtain the URL address carried in the Bluetooth-broadcast synchronization information, after the second Bluetooth device receiving the Bluetooth-broadcast synchronization information sent by the Bluetooth first device.

The block 406 may be the same as the block 304 and may be referred to the block 304, so will not be repeated herein.

To sum up, in the receiving method for the Bluetooth broadcasting in the embodiments of the present disclosure, the first Bluetooth device reduces the length of the information by carrying the URL address with the Bluetooth-broadcast synchronization information, so that the second Bluetooth device may obtain the target information according to the URL address, thereby the integrity of the data information transmitted for the Bluetooth broadcasting may be ensured.

FIG. 8 is a flowchart of a receiving method for the Bluetooth broadcasting according to an embodiment of the present disclosure. The method may be applied to the transmission process of a Bluetooth broadcast as illustrated in FIG. 1, and the method may include the following operations.

At block 502: the second Bluetooth device receives the extension broadcast package sent by the first Bluetooth device.

The URL address is carried in the extension broadcast package, and the URL address is configured to point to the target information.

In some embodiments, the first Bluetooth device is a source device for the Bluetooth broadcasting, and the second Bluetooth device is a receiving end device for the Bluetooth broadcasting.

The URL address may be categorized into a URL long address or a URL short address according to a size of the URL address in bytes. In some embodiments, the URL address in the embodiments of the present disclosure may be realized as the URL short address. The description of the URL short address may refer to embodiments above, and will not be repeated herein.

The target information pointed to by the URL address may be the information that is related to the Bluetooth-broadcast synchronization information, or may be the information that is not related to the Bluetooth-broadcast synchronization information.

In some embodiments, the target information is the information related to the Bluetooth broadcast audio stream.

As mentioned above, the target information may include: all contents or a part of the Bluetooth BASM. In some embodiments, the Bluetooth BASM may include at least one of the audio stream language and the program information. In some embodiments, the target information may include the sharing image codes for the Bluetooth broadcasting audio stream.

The extension broadcast package may be different from the main broadcast package, and the physical layer where the extension broadcast package is located, is different from the physical layer where the main broadcast package. The PDU type of the extension broadcast package may include, but not be limited to, at least one of: the AUX_ADV_IND, the AUX_SYNC_IND, and the AUX_CHAIN_IND.

In some embodiments, the PDU type of the extension broadcast package is the AUX_SYNC_IND.

In some embodiments, the extension broadcast package is sent by the first Bluetooth device periodically.

As mentioned above, the URL address may be configured to point to the target information, therefore, in some embodiments, the contents carried in the broadcast data field of the extension broadcast package may be realized in the following ways:
the broadcast data field of the extension broadcast package is configured to carry the URL address, and the URL address is configured to point to: all contents of the target information;
or, the broadcast data field of the extension broadcast package is configured to carry the URL address and the first content of the target information, and the URL address is configured to point to: the contents other than the first content in the target information.

Take, for instance, the target information being the information related to the Bluetooth broadcast audio stream.

Under a condition that the target information includes all contents of the Bluetooth BASM, the broadcast data field of the extension broadcast package may be configured to only carry the URL address therein, and the URL address is configured to point to the all contents of the Bluetooth BASM.

Under a condition that the target information includes a part of the contents of the Bluetooth BASM, the broadcast data field of the extension broadcast package may be configured to carry the first content of Bluetooth BASM and the URL address, and the URL address is configured to point to contents other than the first content in the Bluetooth BASM.

At block 504: the second Bluetooth device obtains the target information according to the URL address.

As mentioned above, the URL address may be configured to point to the target information.

The second Bluetooth device may obtain URL address carried in the Bluetooth-broadcast synchronization information, after the second Bluetooth device receiving the Bluetooth-broadcast synchronization information sent from the first Bluetooth device.

According to the block 502, the second Bluetooth device may receive the extension broadcast package sent from the first Bluetooth device, to obtain the URL address. Then, the second Bluetooth device may obtain the URL address through a web browser, and obtain the target information according to the URL address.

In some embodiments, the extension broadcast package may include both the URL address and the Bluetooth BASM, and the URL address is configured to point to a part of contents of the Bluetooth BASM.

The block 502 may be the same as the block 304 and may be referred to the block 304, so will not be repeated herein.

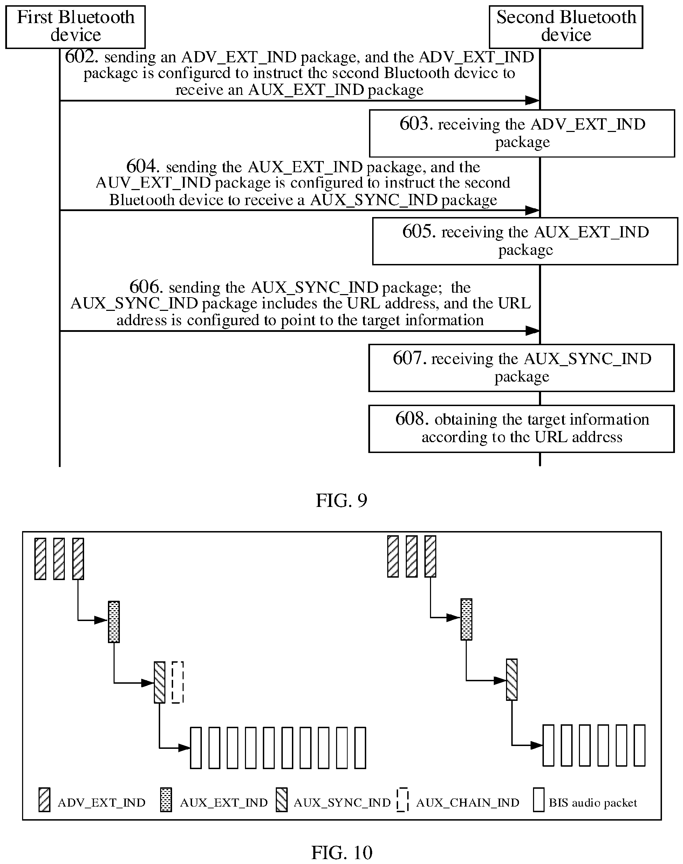

For example, when data for the Bluetooth broadcasting is sent by the broadcast package, FIG. 9 and FIG. 10 provide a flowchart of a data transmission for the Bluetooth broadcasting according to an embodiment of the present disclosure. The flowchart may be applied to the transmission process of a Bluetooth broadcast as illustrated in FIG. 1.

The PDU type of the broadcast package may include at least one of: the ADV_EXT_IND, an auxiliary extension indication frame AUX_EXT_IND, and the AUX_SYNC_IND. The Bluetooth-broadcast synchronization information is carried in the AUX_SYNC_IND package. The data transmission for the Bluetooth broadcasting provided in the present disclosure may include the following operations.

At block 602: the first Bluetooth device sends the ADV_EXT_IND package to the second Bluetooth device.

The ADV_EXT_IND package is configured to instruct the second Bluetooth device to receive the AUX_EXT_IND package.

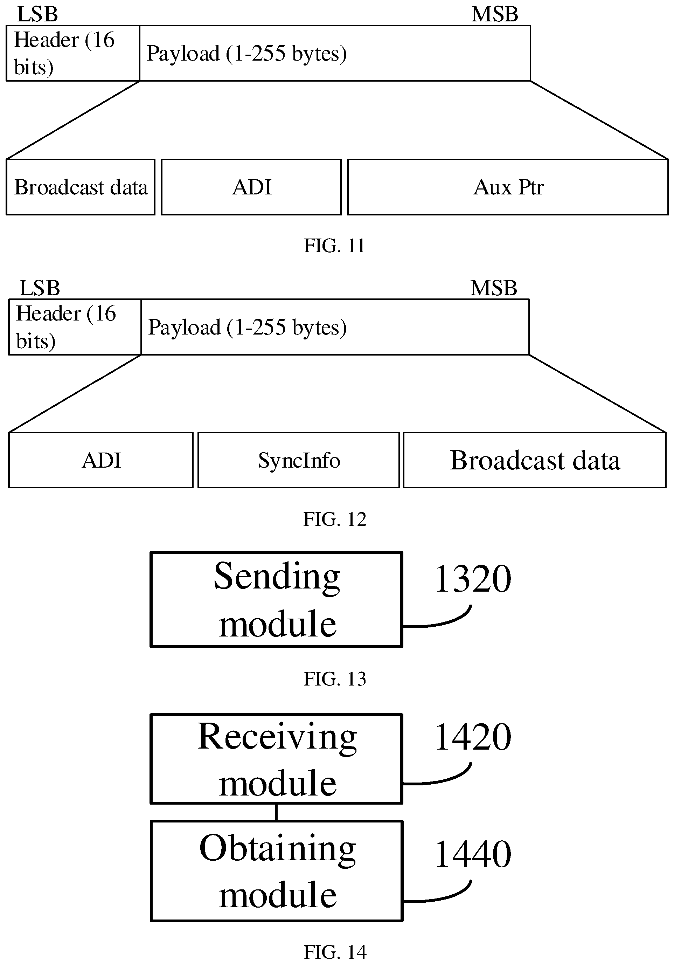

A structure of the AUX_EXT_IND is illustrated in FIG. 11. Three fields may be included in a payload of the AUX_EXT_IND, including the broadcast data, the ADI, and the Aux Ptr.

In some embodiments, the Aux Ptr field of the AUX_EXT_IND package is configured to carry a first indication. The first indication is configured to indicate a time, a channel, and a physical layer at which the AUX_EXT_IND package appears.

In some embodiments, the first Bluetooth device is the source device for the Bluetooth broadcasting, and the second Bluetooth device is the receiving end device for the Bluetooth broadcasting.

At block 603: the second Bluetooth device receives the ADV_EXT_IND package.

According to the block 602, the second Bluetooth device may scan to receive the ADV_EXT_IND package sent by the first Bluetooth device.

In some embodiments, the second Bluetooth device may obtain the first indication, after the second Bluetooth device receiving the ADV_EXT_IND package. The first indication is configured to indicate information related to the AUX_EXT_IND package, including but not limited to, the time, the channel, and the physical layer at which the AUX_EXT_IND package appears.

At block 604: The first Bluetooth device sends the AUX_EXT_IND package to the second Bluetooth device.

The AUX_EXT_IND package may be configured to instruct the second Bluetooth device to receive the AUX_SYNC_IND package.

A structure of the AUX_EXT_IND is illustrated in FIG. 12. Three fields may be included in a payload of the AUX_EXT_IND, including the ADI, a SyncInfo, and the broadcast data.

In some embodiments, the SyncInfo of the AUX_EXT_IND package is configured to carry a second indication. The second indication is configured to indicate information related to the AUX_SYNC_IND package, including but not limited to, a time, a channel, and a physical layer at which the AUX_SYNC_IND package appears, as well as a sending cycle for the AUX_SYNC_IND package.

At block 605: the second Bluetooth device receives the AUX_EXT_IND package.

According to the block 604, the second Bluetooth device may scan to receive the AUX_EXT_IND package sent by the first Bluetooth device.

In some embodiments, the second Bluetooth device may obtain the second indication by receiving the AUX_EXT_IND package. The second indication is configured to indicate the time, the channel, and the physical layer at which the AUX_SYNC_IND package appears, as well as the sending cycle for the AUX_SYNC_IND package.

At block 606: the first Bluetooth device sends the AUX_SYNC_IND package to the second Bluetooth device.

The AUX_SYNC_IND package may include the URL address, and the URL address is configured to point to target information.

In some embodiments, the URL address may be categorized into a URL long address or a URL short address according to a size of the URL address in bytes. The URL long address occupies more bytes than the URL short address. In some embodiments, the URL address in the embodiments of the present disclosure may be realized as the URL short address.

The target information pointed to by the URL address may be the information that is related to the Bluetooth-broadcast synchronization information, or may be the information that is not related to the Bluetooth-broadcast synchronization information.

In some embodiments, the target information is carried in the web page data pointed to by the URL address.

The target information may include, but not be limited to, at least one of: the information related to the UUID, the information related to the Broadcast_ID, the information related to the BIGInfo, and the information related to the Bluetooth BASM.

In some embodiments, the target information is the information related to the Bluetooth broadcast audio stream.

As mentioned above, the target information may alternatively include: all contents or a part of the Bluetooth BASM. The Bluetooth BASM may include at least one of the audio stream language and the program information. The target information may alternatively include the sharing image codes for the Bluetooth broadcast audio stream.

At block 607: the second Bluetooth device receives the AUX_SYNC_IND package.

According to the block 606: the second Bluetooth device may scan to receive the AUX_SYNC_IND package sent by the first Bluetooth device.

In some embodiments, the second Bluetooth device may obtain the URL address by receiving the AUX_SYNC_IND package.

As illustrated in FIG. 10, the following methods may be selected for the transmission process of a Bluetooth broadcast.

As illustrated in the left part of the FIG. 10, the first Bluetooth device may send the ADV_EXT_IND package, and the ADV_EXT_IND package is configured to instruct the second Bluetooth device to receive the AUX_EXT_IND. The second Bluetooth device may obtain the instruction to receive the AUX_EXT_IND by receiving the ADV_EXT_IND package. The first Bluetooth device may then send the AUX_EXT_IND package, and the AUX_EXT_IND package is configured to instruct the second Bluetooth device to receive the AUX_SYNC_IND package. The second Bluetooth device may unpack the AUX_ADV_IND package to obtain a plurality of broadcast isochronous stream audio packages (BIS Audio Package), after the second Bluetooth device receiving the AUX_ADV_IND package.

In some embodiments, the AUX_ADV_IND package is configured to carry the URL address, and the URL address is configured to point to the target information. The target information may be all or a part of the data transmitted for the Bluetooth broadcasting. The second Bluetooth device may obtain all contents or a part of the contents of the Bluetooth broadcast by unpacking the AUX_ADV_IND package.

In some embodiments, the AUX_ADV_IND package is configured to carry an instruction to receive the AUX_SYNC_IND package, and the second Bluetooth device may receive the AUX_SYNC_IND package according to the instruction. The second Bluetooth device may unpack the AUX_SYNC_IND package.

When the second Bluetooth device receives the AUX_SYNC_IND package, the second Bluetooth device may unpack the AUX_ADV_IND package and the AUX_SYNC_IND package respectively, in order to obtain a plurality of BIS Audio Packages that together form all the data transmitted for the Bluetooth broadcasting.

When the second Bluetooth device does not receive the AUX_SYNC_IND package, the methods for the transmission process may be illustrated in the right part of the FIG. 10.

At block 608: the second Bluetooth device obtains the target information according to the URL address.

As mentioned above, the URL address is configured to point to the target information.

The second Bluetooth device may obtain the URL address carried in the Bluetooth-broadcast synchronization information, after the second Bluetooth device receiving the Bluetooth-broadcast synchronization information sent from the first Bluetooth device.

The block 608 may be the same as the block 304 and may be referred to the block 304, so will not be repeated herein.

To sum up, the receiving method for the Bluetooth broadcasting in the embodiments of the present disclosure provides a method to send the URL address in specific. That is, the first Bluetooth device may send the extension broadcast package that is configured to carry the URL address to the second Bluetooth device, thereby the second Bluetooth device may receive the target information.

FIG. 13 is a structural block view of a sending apparatus for the Bluetooth broadcasting according to another embodiment of the present disclosure. The apparatus may be realized as the first Bluetooth device or a part of the first Bluetooth device, and the apparatus may include the following modules.

The sending module 1320 may be configured to send the Bluetooth-broadcast synchronization information to the second Bluetooth device.

The Bluetooth-broadcast synchronization information may include the URL address, and the URL address is configured to point to target information.

In some embodiments, the sending module 1320 may be configured to send the extension broadcast package for the Bluetooth broadcasting to the second Bluetooth device, and the URL address is carried in the extension broadcast package.

In some embodiments, the broadcast data field of the extension broadcast package is configured to carry the URL address therein, and the URL address is configured to point to: all contents of the target information; or, the broadcast data field of the extension broadcast package is configured to carry the URL address and a first content of the target information, and the URL address is configured to point to: contents other than the first content in the target information.

In some embodiments, a PDU type of the extension broadcast package is the AUX_SYNC_IND.

In some embodiments, the extension broadcast package is sent periodically.

In some embodiments, the target information is the information related to the Bluetooth broadcast audio stream.

In some embodiments, the target information includes: all contents or a part of the Bluetooth BASM.

In some embodiments, the Bluetooth BASM includes at least one of the audio stream language and the program information.

In some embodiments, the target information includes the sharing image codes for the Bluetooth broadcasting audio stream.

FIG. 14 is a structural block view of a receiving apparatus for the Bluetooth broadcasting according to another embodiment of the present disclosure. The apparatus may be realized as the second Bluetooth device or a part of the second Bluetooth device, and the apparatus may include the following modules.

A receiving module 1420 may be configured to receive the Bluetooth-broadcast synchronization information sent from the first Bluetooth device. The Bluetooth-broadcast synchronization information may include the URL address, and the URL address is configured to point to the target information.

An obtaining module 1440 may be configured to obtain the target information according to the URL address.

In some embodiments, the receiving module 1420 may be configured to receive the extension broadcast package sent by the first Bluetooth device for the Bluetooth broadcasting, and the URL address is carried in the extension broadcast package.

In some embodiments, the broadcast data field of the extension broadcast package is configured to carry the URL address therein, and the URL address is configured to point to: all contents of the target information; or, the broadcast data field of the extension broadcast package is configured to carry the URL address and the first content of the target information, and the URL address is configured to point to: the contents other than the first content in the target information.

In some embodiments, a PDU type of the extension broadcast package is the AUX_SYNC_IND.

In some embodiments, the extension broadcast package is sent periodically.

In some embodiments, the target information is the information related to the Bluetooth broadcast audio stream.

In some embodiments, the target information includes: all contents or a part of the Bluetooth BASM.

In some embodiments, the Bluetooth BASM includes at least one of the audio stream language and the program information.

In some embodiments, the target information includes the sharing image codes for the Bluetooth broadcasting audio stream.

In some embodiments, the obtaining module 1440 may be configured to obtain the web page data pointed to by the URL address through the web browser, and obtain the target information from the web page data.

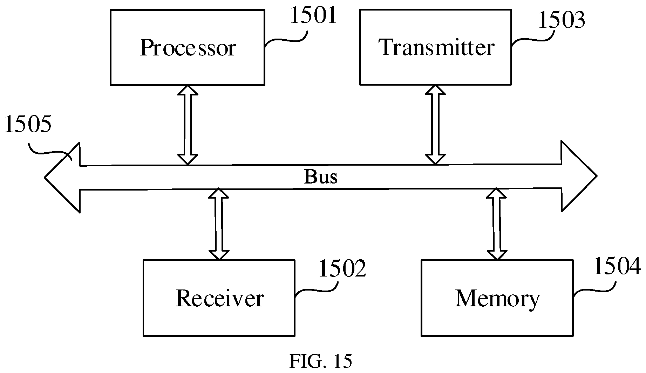

FIG. 15 is a structural block view of a Bluetooth device (the first Bluetooth device or the second Bluetooth device) according to an embodiment of the present disclosure. The communication device may include: a processor 1501, a receiver 1502, a transmitter 1503, a memory 1504, and a bus 1505.

The processor 1501 may include at least one processor core. The processor 1501 may be caused to perform various functional applications and information processing, when at least one software program and module is executed by the processor 1501.

The receiver 1502 and the transmitter 1502 may be realized as a single communication component, and the communication component may be a communication chip.

The memory 1504 may be connected to the processor 1501 through the bus 1505.

The memory 1504 may be configured to store at least one instruction. When the at least one instruction is executed by the processor 1501, the processor 1501 may be caused to perform each operation of the sending method or the receiving method for the Bluetooth broadcasting as mentioned in the embodiments above.

Besides, the memory 1504 may be realized as any type of volatile or non-volatile storage devices, or a combination thereof. A volatile or non-volatile storage device may include, but not be limited to, a disk or CD-ROM, an electrically-erasable programmable read only memory (EEPROM), an erasable programmable read only memory (EPROM), a static random access memory (SRAM), a read-only memory (ROM), a magnetic memory, a flash memory, and a programmable read-only memory (PROM).

In a first aspect, some embodiments of the present disclosure provide a computer-readable storage medium and the computer-readable storage medium may store at least one program code. A processor may be caused to perform the sending method or the receiving method for the Bluetooth broadcasting as described above, when the at least one program code is loaded and executed by the processor.

In a second aspect, some embodiments of the present disclosure provide a computer program or computer program product, and the computer program or computer program product may include at least one computer instruction. The at least one computer instruction may be stored in a computer-readable storage medium. A processor of a computer device may execute the at least one computer instruction to cause the computer device to perform the sending method or the receiving method for the Bluetooth broadcasting as described above, when the processor of the computer device reads the at least one computer instruction from the computer-readable storage medium.

In a third aspect, some embodiments of the present disclosure provide a chip, and the chip may include a programmable logic circuit and/or at least one program instruction. The chip may be configured to perform the sending method or the receiving method as described above, when the chip executes.

What have been mentioned above are merely optional embodiments of the present disclosure and may not intend to limit the scope of the present disclosure. Any modifications, equivalent substitutions, improvements, etc. made under the spirit and principles of the present disclosure shall be included in the scope of protection of the present disclosure.

## Claims

1. A sending method for Bluetooth broadcasting, **characterized by** comprising:
sending (402), by a first Bluetooth device, Bluetooth-broadcast synchronization information to a second Bluetooth device;
wherein the Bluetooth-broadcast synchronization information comprises a uniform resource locator URL address, and the URL address is configured to point to target information.

2. The method as claimed in claim 1, wherein the sending (402), by a first Bluetooth device, Bluetooth-broadcast synchronization information to a second Bluetooth device, comprises:
sending (202), by the first Bluetooth device, an extension broadcast package for the Bluetooth broadcasting to the second Bluetooth device, wherein the URL address is carried in the extension broadcast package.

3. The method as claimed in claim 2, wherein
a broadcast data field of the extension broadcast package is configured to carry the URL address therein, and the URL address is configured to point to: all contents of the target information;
or,
a broadcast data field of the extension broadcast package is configured to carry the URL address and a first content of the target information, and the URL address is configured to point to: contents other than the first content in the target information.

4. The method as claimed in claim 2, wherein a protocol data unit PDU type of the extension broadcast package is an auxiliary synchronization indication frame AUX_SYNC_IND.

5. The method as claimed in claim 2, wherein the extension broadcast package is sent periodically.

6. The method as claimed in any one of claims 1-5, wherein the target information is information related to a Bluetooth broadcast audio stream.

7. The method as claimed in claim 6, wherein the target information comprises: all contents or a part of Bluetooth broadcast audio stream metadata (BASM).

8. The method as claimed in claim 7, wherein
the Bluetooth BASM comprises at least one of audio stream language and program information.

9. The method as claimed in claim 6, wherein the target information comprises sharing image codes for the Bluetooth broadcast audio stream.

10. A receiving method for Bluetooth broadcasting, **characterized by** comprising:
receiving (302), by a second Bluetooth device, Bluetooth-broadcast synchronization information sent from a first Bluetooth device; wherein the Bluetooth-broadcast synchronization information comprises a uniform resource locator URL address, and the URL address is configured to point to target information; and
obtaining (304), by the second Bluetooth device, the target information according to the URL address.

11. The method as claimed in claim 10, wherein the receiving (302), by a second Bluetooth device, Bluetooth-broadcast synchronization information sent from a first Bluetooth device, comprises:
receiving (502), by the second Bluetooth device, an extension broadcast package for the Bluetooth broadcasting sent from the first Bluetooth device, wherein the URL address is carried in the extension broadcast package.

12. The method as claimed in claim 11, wherein
a broadcast data field of the extension broadcast package is configured to carry the URL address therein, and the URL address is configured to point to: all contents of the target information;
or,
a broadcast data field of the extension broadcast package is configured to carry the URL address and a first content of the target information, and the URL address is configured to point to: contents other than the first content in the target information.

13. The method as claimed in claim 11, wherein a protocol data unit PDU type of the extension broadcast package is an auxiliary synchronization indication frame AUX_SYNC_IND.

14. The method as claimed in claim 11, wherein the extension broadcast package is sent periodically.

15. The method as claimed in any one of claims 10-14, wherein the target information is information related to a Bluetooth broadcast audio stream.

16. The method as claimed in claim 15, wherein the target information comprises: all contents or a part of Bluetooth broadcast audio stream metadata (BASM).

17. The method as claimed in claim 16, wherein
the Bluetooth BASM comprises at least one of audio stream language and program information.

18. The method as claimed in claim 15, wherein the target information comprises sharing image codes for the Bluetooth broadcast audio stream.

19. The method as claimed in any one of claims 10-14, wherein the obtaining (304), by the second Bluetooth device, the target information according to the URL address, comprises:
obtaining, by the second Bluetooth device, web page data pointed to by the URL address through a web browser; and
obtaining, by the second Bluetooth device, the target information from the web page data.

20. A sending apparatus for Bluetooth broadcasting, **characterized by** comprising:
a sending module (1320), configured to send Bluetooth-broadcast synchronization information to a second Bluetooth device;
wherein the Bluetooth-broadcast synchronization information comprises a uniform resource locator URL address, and the URL address is configured to point to target information.

21. A receiving apparatus for Bluetooth broadcasting, **characterized by** comprising:
a receiving module (1420), configured to receive Bluetooth-broadcast synchronization information sent from a first Bluetooth device, wherein the Bluetooth-broadcast synchronization information comprises a uniform resource locator URL address, and the URL address is configured to point to target information; and
an obtaining module (1440), configured to obtain the target information according to the URL address.

22. A first Bluetooth device, **characterized by** comprising a processor (1501) and a memory (1504), wherein the memory (1504) stores at least one program code; when the at least one program code is loaded and executed by the processor (1501), the processor (1501) is caused to perform the sending method for Bluetooth broadcasting as claimed in any one of claims 1-9.

23. A second Bluetooth device, **characterized by** comprising a processor (1501) and a memory (1504), wherein the memory (1504) stores at least one program code; when the at least one program code is loaded and executed by the processor (1501), the processor (1501) is caused to perform the receiving method for Bluetooth broadcasting as claimed in any one of claims 10-19.

24. A computer-readable storage medium, **characterized by** that the computer-readable storage medium stores at least one program code; when the at least one program code is loaded and executed by a processor (1501), the processor (1501) is caused to perform the sending method for Bluetooth broadcasting as claimed in any one of claims 1-9, or the receiving method for Bluetooth broadcasting as claimed in any one of claims 10-19.

25. A computer program, **characterized by** comprising at least one computer instruction, wherein the at least one computer instruction is stored in a computer-readable storage medium; when a processor (1501) of a computer device reads the at least one computer instruction from the computer-readable storage medium and executes the at least one computer instruction, the computer device is caused to perform the sending method for Bluetooth broadcasting as claimed in any one of claims 1-9, or the receiving method for Bluetooth broadcasting as claimed in any one of claims 10-19.

26. A computer program product, **characterized by** comprising at least one computer instruction, wherein the at least one computer instruction is stored in a computer-readable storage medium; when a processor (1501) of a computer device reads the at least one computer instruction from the computer-readable storage medium and executes the at least one computer instruction, the computer device is caused to perform the sending method for Bluetooth broadcasting as claimed in any one of claims 1-9, or the receiving method for Bluetooth broadcasting as claimed in any one of claims 10-19.

27. A chip, **characterized by** comprising a programmable logic circuit and/or at least one program instruction, wherein when the chip executes, the chip is configured to perform the sending method for Bluetooth broadcasting as claimed in any one of claims 1-9, or the receiving method for Bluetooth broadcasting as claimed in any one of claims 10-19.
